## Europäisches Patentamt
## European Patent Office
## Office européen des brevets

(11) Veröffentlichungsnummer: **0 115 330**
**A2**

# EUROPÄISCHE PATENTANMELDUNG

(21) Anmeldenummer: **84100742.0**

(22) Anmeldetag: **25.01.84**

(51) Int. Cl.³: **H 04 B 1/66**

(30) Priorität: **28.01.83 DE 3302828**

(43) Veröffentlichungstag der Anmeldung:
**08.08.84 Patentblatt 84/32**

(84) Benannte Vertragsstaaten:
**DE FR GB**

(71) Anmelder: **International Standard Electric Corporation**
**320 Park Avenue**
**New York New York 10022(US)**

(84) Benannte Vertragsstaaten:
**FR GB**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Langewellpott, Ulrich, Dr.**
**Sulzgrieser Steige 23/5**
**D-7300 Esslingen(DE)**

(74) Vertreter: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

(54) Empfangsgerät.

(57) Beim Empfangsgerät für ortsfeste und bewegliche Sende Empfangsstationen eines digitalen Funksystems mit Funkverkehr im Zeitmultiplex mit Vielfachzugriff und Spreizspektrumtechnik ist zur Ausnutzung der Umwegesignale eine kohärente Demodulation vorgesehen. Gleichzeitig wird eine dauernde Regeneration des Signales, das das Umwegeprofil abbildet, vorgenommen.

Fig. 1

U.Langewellpott-4

Empfangsgerät

Die Erfindung bezieht sich auf ein Empfangsgerät gemäß dem Oberbegriff des Anspruchs 1.

Aus der EP 0064 686 ist ein Nachrichtenübertragungssystem bekannt, das bewegliche und ortsfeste Sende/Empfangsstationen aufweist und dessen Funkverkehr im Zeitmultiplex und in Spreizspektrumstechnik erfolgt. Zur Wiedergewinnung der gesendeten Nachricht sind Korrelatoren und Hüllkurvendetektoren vorgesehen.

Zur Ausnutzung der auftretenden Umwegsignale eines Mehrwegefeldes werden dort Korrelationsergebnisse von ausreichend leistungsstarken Ausbreitungspfaden durch Abtastung zu den entsprechenden Zeiten und Integration der Abtastwerte ausgenutzt.

Der Erfindung liegt die Aufgabe zugrunde, ein Empfangsgerät mit einem Demodulator für die Sende/Empfangsstationen der genannten Art anzugeben, das eine kohärente Demodulation der empfangenen Signale ermöglicht.

ZT/P1-Wr/R
24.01.1983

U.Langewellpott -4

Die Lösung dieser Aufgabe erfolgt mit den im Anspruch 1 angegebenen Mitteln. Ausgestaltungen können den Unteransprüchen entommen werden.

Durch die Efindung sind auch Umwegsignale mit unterschiedlichen Laufzeiten, Amplituden und Nullphasenwinkeln kohärent demodulierbar und damit ausnutzbar. Dies bedeutet eine erhebliche Verbesserung des Übertragungsverhaltens, insbesondere bei kritischen Mehrwegefeldern, sowie eine Steigerung der Störresitenz gegen Signale aus Nachbarzellen. Es ist jetzt auch die Möglichkeit gegeben, biorthogonale m-wertige Codezeichen zu verwenden und dadurch die Frequenzökonomie zu steigern.

Die Erfindung wird nun anhand von Zeichnungen eines Ausführungsbeispieles näher erläutert. Es zeigen:

Fig. 1    ein Blockschaltbild eines Empfangsgerätes und

Fig. 2    ein Blockschaltbild einer Regenerationsschaltung des Empfangsgerätes.

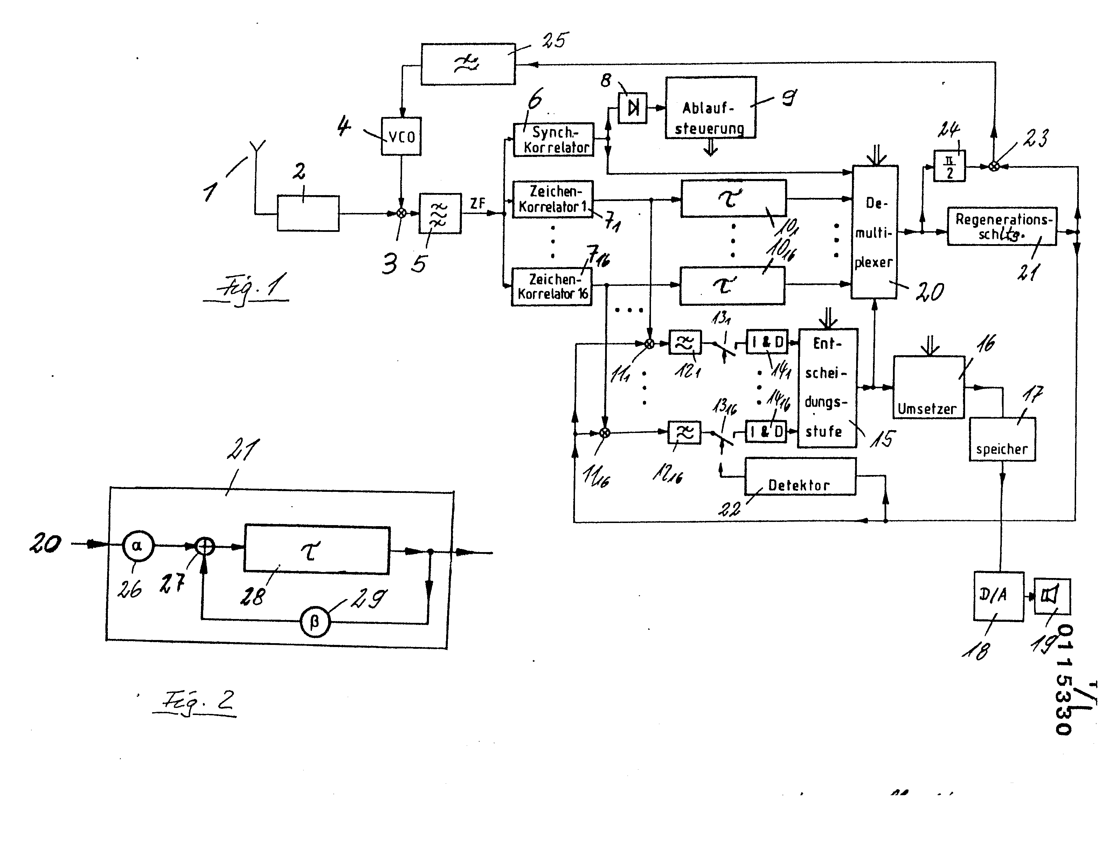

Das in Fig. 1 dargestellte Empfangsgerät ist für die Sende/Empfangsstationen eines digitalen Funksystemes vorgesehen, dessen Funkverkehr im Zeitmultiplex mit Vielfachzugriff und in Spreizspektrumstechnik erfolgt. Es werden jeweils n zu übertragende Bits zu einer n-Bit-Gruppe zusammengefaßt und dann durch Codezeichen eines m-wertigen Alphabets codiert. Die so entstandenen Zeichen werden gesendet und müssen im Empfangsgerät wieder in die n Bits gewandelt werden. Im nachfolgend beschriebenen Beispiel ist n = 4 und m = 16. Im Funksystem können mehrere ortsfeste Sende/Empfangsstationen von einer Leitstelle gesteuert werden, von denen wiederum mehrere mit einer Überleiteinrichtung

U.Langewellpott-4

zu einem Fernsprechwählnetz verbunden sind. Jede Leitstelle
versorgt eine Zelle.

In Fig. 1 ist nur das Empfangsgerät einer Sende/Empfangs-
station dargestellt und alle nicht unmittelbar dazugehörenden Teile der Station nicht gezeigt.

Eine Antenne 1 ist an ein HF-Teil 2 angeschlossen, dessen
Ausgang mit einem Mischer 3 zur Erzeugung eines ZF-Signales
ZF verbunden ist. Der Mischer 3 ist weiterhin mit einem als
Mischoszillator    dienenden spannungsgesteuerten Oszillator
(VCO) verbunden. Das entstandene ZF-Signal wird über einen
Bandpaß 5 einem Synchronkorrelator 6 und $m = 16$ Zeichenkorrelatoren $7_1$ bis $7_{16}$ zugeführt. An den Synchronkorrelator
6 schließt sich ein Hüllkurvendemodulator 8 an, der mit
einer Ablaufsteuerung 9 verbunden ist.

An jeden der $m = 16$ Zeichenkorrelatoren $7_1$ bis $7_{16}$ ist ein
Verzögerungsglied 10, beispielsweise eine Verzögerungsleitung, und ein Mischer 11 angeschaltet. Den Mischern $11_1$ bis
$11_{16}$ wird eine Signalschwingung von der Regenerationsschaltung  21 zugeführt, die später noch erklärt wird. An jeden
Mischer 11 ist in Reihe ein Tiefpaß 12, ein Abtastschalter
13 und ein Integrator 14 mit zyklischer Nullsetzung angeschlossen. Alle Integratoren $14_1$ bis $14_6$ sind mit einer Entscheidungsstufe 15 verbunden, die von der Ablaufsteuerung getaktet wird.

Der Ausgang der Entscheidungsstufe 15 ist mit einem Umsetzer
16 verbunden, der gesteuert von der Ablaufsteuerung 9 4-Bit-
Gruppen erzeugt. An den Umsetzer 16 schließt sich ein
Zwischenspeicher 17 an, an den bei digitaler Sprachübertragung im Falle einer beweglichen Sende/Empfangsstation in Reihe
ein Digital/Analog-Wandler 18 und ein Hörer oder

U.Langewellpott-4

Lautsprecher 19 und im Falle einer ortsfesten Sende/Empfangs-
station eine entsprechende Verarbeitungseinheit (nicht dargestellt) angeschlossen ist.

An die Verzögerungsglieder $10_1$ bis $10_{16}$ ist ein Demultiplexer 20 angeschlossen, in den auch noch das Ausgangssignal des Synchronkorrelators 6 eingespeist wird und der von
der Entscheidungsstufe 15 gesteuert und von der Ablaufsteuerung 9 getaktet wird. An den Demultiplexer 20 schließt
sich die Regenerationsschaltung 21 an, deren Ausgang mit den
Mischern $11_1$ bis $11_{16}$, einem Detektor 22 zum Steuern der
Abtastschalter $13_1$ bis $13_{16}$ und einem Phasenvergleicher 23
in Verbindung steht. Der Vergleicher 23 ist über einen um
$\pi/2$ drehenden Phasenschieber 24 auch mit dem Ausgang des Demultiplexers 20 verbunden. Über einen Tiefpaß 25 ist der
Ausgang des Vergleichers 23 an einen Steuereingang des Mischoszillators 4 angeschlossen.

Das durch die Antenne 1 aufgenommene Signal wird im HF-Teil 2
aufbereitet, z. B. gefiltert und verstärkt, und gelangt dann
auf den Mischer 3, in dem es in das ZF-Signal herabgemischt
wird. Der Bandpaß 5 beseitigt unerwünschte Seitenbänder und
Störsignale und das ZF-Signal gelangt dann an den Synchronkorrelator 6 und die Zeichenkorrelatoren $7_1$ bis $7_{16}$. Der
Synchronkorrelator dient zur Synchronisation des Empfangsgerätes auf die empfangenen Zeitschlitze und er erhält von
einem nicht dargestellten Codegenerator ein Synchroncodewort.
Der Hüllkurvenmodulator 8 gibt dann aufgrund der Autokorrelationsfunktion ein entsprechendes Signal an die Ablaufsteuerung 9, die nun ihrerseits die Entscheidungsstufe 15,
den Demultiplexer 20 und den Umsetzer 16 richtig taktet.
Das Ausgangssignal des Synchronkorrelators 6 mit

U.Langewellpott-4

seiner amplituden- und phasenmodulierten Schwingung bildet das Profil des Mehrwegefeldes ab. Das heißt, entsprechend den empfangenen Umwegesignalen bilden sich Korrelationsspitzen, deren zeitliche Abfolge das Profil darstellen. Daraus wird ein phasenkohärentes Signal zur Demodulation des empfangenen Signales gewonnen. Hierzu wird es an den Demultiplexer 20 gegeben, der es in die Regenerationsschaltung 21 einspeist. In der Regenerationsschaltung ist eine ringförmig geschaltete Verzögerungsleitung mit dem Verstärkungsfaktor 1 vorhanden, deren Verzögerungszeit $\tau$ gleich der Dauer eines Zeichens ist. Infolgedessen steht am Ausgang der Regenerationsschaltung eine Signalschwingung mit dem Profil des Mehrwegefeldes in periodischer Folge zur Verfügung.

Den Zeichenkorrelatoren $7_1$ bis $7_{16}$ wird vom Codegenerator je eines der sechzehn Codeworte zugeführt und sie vergleichen das erhaltene ZF-Signal damit. Die Ausgangssignale der Zeichenkorrelatoren werden phasenkohärent mit der Signalschwingung der Regenerationsschaltung 21 in den Mischern $11_1$ bis $11_{16}$ gemischt und nach den Tiefpässen $12_1$ bis $12_{16}$ von den Abtastschaltern $13_1$ bis $13_{16}$ abgetastet. Die Abtastzeitpunkte ermittelt der Detektor 22 aus der Signalschwingung der Regenerationsschaltung, in dem er auf die Maxima in dieser Signalschwingung reagiert. Die abgetasteten Signale speisen die Integratoren $14_1$ bis $14_{16}$ und werden dort aufaddiert. Zum Ende jedes Zeichenintervalls fragt die Entscheidungsstufe 15, gesteuert durch die Ablaufsteuerung 9, die Integratoren ab und diese werden dann wieder auf Null gesetzt. Aus den abgefragten integrierten Signalen wählt die Entscheidungsstufe 15 das Signal mit dem größten Betrag aus und definiert das dem entsprechenden Zeichenkorrelator zugeordnete Codewort als das mit höchster Wahrscheinlichkeit gesendete Zeichen.

U.Langewellpott-4

Der nachfolgende Umsetzer 16 erzeugt daraus die zugehörige 4-Bit-Gruppe, die dann zwischengespeichert wird.

Die weitere Verarbeitung hängt davon ab, in welcher Station sich der Empfänger befindet. Bei einer beweglichen Sende/Empfangsstation werden im Falle digitaler Sprachübertragung die zwischengespeicherten 4-Bit-Gruppgen digital/analog gewandelt und im Hörer 19 wiedergegeben. Bei einer stationären Sende/Empfangsstation werden die zwischengespeicherten 4-Bit-Gruppen an eine Verarbeitungseinheit zur Weiterleitung an die Leitstelle gegeben.

Die Auswahl eines Zeichenkorrelators $7_1$ bis $7_{16}$ durch die Entscheidungsstufe 15 wird dem Demultiplexer mitgeteilt und dieser verbindet daraufhin den Ausgang des entsprechenden Verzögerungsgliedes $10_1$ bis $10_{16}$ mit der Regenerationsschaltung 21. Die Regenerationsschaltung paßt hiermit das in ihr vorhandene Mehrwegeprofil an das gerade empfangene an, so daß die Signalschwingung, die Amplituden, Nullphasenwinkel und Laufzeiten der einzelnen Ausbreitungswege aufweist. Hiermit werden die Mischer $11_1$ bis $11_{16}$ betrieben, so daß eine kohärente Mischung entsteht. Gleichzeitig erhält der Detektor 22 diese Signalschwingung 9, so daß er die Abtastschalter $13_1$ bis $13_{16}$ entsprechend steuern kann.

Durch die sich ändernden Temperaturen der Umgebung kann die Frequenz des Mischoszillators 4 wandern und somit Phasenverschiebungen hervorrufen. Aus dem gleichen Grund können auch Laufzeitänderungen auftreten, die ebenfalls Phasenverschiebungen bewirken. Um diesem zu begegnen, wird die Signalschwingung am Ausgang der Regenerationsschaltung 21 mit dem vom Demultiplexer 20 durchgeschalteten und um $\pi/2$ gedrehten Signal im Vergleicher 23 verglichen.

U.Langewellpott -4

Das daraus entstehende Regelsignal steuert über den Tiefpaß 25 den Mischoszillator 4. Hierbei ist darauf zu achten, daß eine langsame Nachstellung des Mischoszillators 4 erfolgt, da in diesem Regelkreis die Verzögerungsglieder $10_1$ bis $10_{16}$ Totzeitglieder darstellen.

Die Regenerationsschaltung 21 erhält am Anfang jedes Zeitschlitzes das Signal vom Synchronkorrelator 6, das das Mehrwegeprofil als amplituden- und phasenmodulierte Schwingung abbildet, vom Demultiplexer 20 zugeführt und sie speichert es. An die Synchronpräambel schließt sich als Trainingssequenz eine Folge bekannter Zeichen an, die, da für sie der entsprechende Zeichenkorrelator feststeht, fehlerfrei eine amplituden- und phasenmodulierte Schwingung als Abbild des Mehrwegeprofiles liefern. Auch diese Signale werden über den Demultiplexer 20 der Regenerationsschaltung 21 zugeführt, die sie zum bereits vorhandenen Signal addiert. Danach steht am Ausgang ein phasenkohärentes Signal zur Demodulation zur Verfügung, das, wie schon beschrieben, laufend dem aktuellen Mehrwegeprofil angepaßt wird.

In Fig. 2 ist das Blockschaltbild der Regenerationsschaltung 21 dargestellt. Der Eingang ist über ein Dämpfungsglied 26 mit dem Faktor $\alpha$ und eine nachfolgende Additionsstufe 27 mit einer Verzögerungsleitung 28 verbunden. Die Verzögerungszeit $\tau$ ist gleich der Dauer eines Zeichens. Der Ausgang ist über ein weiteres Dämpfungsglied 29 mit dem Faktor $\beta = 1-\alpha$ mit der Additionsstufe 27 verbunden.

Zu Beginn eines jeden Zeitschlitzes wird das Signal vom Synchronkorrelator 6 in die Verzögerungsleitung 28 ohne Dämpfung eingespeichert, das heißt, der Faktor $\alpha$ ist gleich eins. Ebenso werden die Signale von den Zeichenkorrela-

U.Langewellpott -4

toren, die die nachfolgende Trainingssequenz auswerten, ohne Dämpfung eingespeichert, so daß der Regenerationsprozeß optimal anlaufen kann, weil keine Entscheidungsfehler auftreten. Jetzt wird der Faktor $\alpha$ beispielsweise auf den Wert 0,1 eingestellt, was für den Faktor $\beta$ des Dämpfungsgliedes 29 gleich 0,9 bedeutet. Dies bedeutet, daß das eingespeicherte Signal zu 90 % auf den Eingang der Verzögerungsleitung 28 zurückgeführt wird und nur 10 % eines am Eingang der Regenerationsschaltung 21 anliegenden Signals hinzukommen. Hiermit wird erreicht, daß die nachfolgend von den Zeichenkorrelatoren gelieferten Signale, wenn sie fehlerhaft sind, das Signal der Regenerationsschaltung nur unwesentlich verfälschen und, wenn sie einwandfrei sind, dagegen verbessern, weil eine kohärente Addition der Nutzsignalanteile stattfindet, während sich Störsignale inkohärent überlagern. Dies bedeutet eine laufende Anpassung an das tatsächliche Mehrwegeprofil während des Zeitschlitzes und eine hohe Unterdrückung von Störungen.

Da die Speicherdauer der Länge eines Zeichens entspricht, steht am Ausgang der Regenerationsschaltung 21 das Signal des Mehrwegeprofiles in periodischer Folge zur Verfügung und kann zeitsynchron zur kohärenten Demodulation der Signale der Zeichenkorrelatoren benutzt werden.

Die Anwendung von biorthogonalen m-wertigen Codezeichen zur Spreizung der n-Bit-Gruppen bedeutet, daß jedes Zeichen auch in invertierter Form gesendet werden kann. In der Entscheidungsstufe 15 muß dann nach dem betragsmäßig größten Integrationsergebnis gesucht und anschließend dessen Vorzeichen ausgewertet werden. Der Demultiplexer 20 muß dann auch eine Vorzeichenumkehr ermöglichen.

U.Langewellpott-4

Patentansprüche

1. Empfangsgerät mit einem vom ZF-Signal gespeisten Demodulator, der einen Synchronkorrelator mit nachfolgender Ablaufsteuerung und m Zeichenkorrelatoren mit nachfolgenden m Detektoren und einer Entscheidungsstufe enthält, für ortsfeste und bewegliche Sende/Empfangsstationen eines digitalen Funksystems mit Funkverkehr im Zeitmultiplex mit Vielfachzugriff und Spreizspektrumstechnik, wobei jeweils n zu übertragende Bits zu einer n-Bit-Gruppe zusammengefaßt und durch ein Codezeichen eines m-wertigen Alphabets codiert sind, d a d u r c h   g e k e n n z e i c h n e t, daß jeder Detektor einen Mischer ($11_1$-$11_{16}$) mit nachfolgendem Tiefpaß ($12_1$-$12_{16}$), Abtastschalter ($13_1$-$13_{16}$) und Integrator ($14_1$-$14_{16}$) mit zyklischer Nullsetzung enthält, daß an jeden Zeichenkorrelator ($7_1$-$7_{16}$) eine Verzögerungsleitung ($10_1$-$10_{16}$) und an diese ein Demultiplexer (20) angeschlossen ist, der auch mit dem Ausgang des Synchronkorrelators (6) verbunden ist, der vom Ausgangssignal der Entscheidungsstufe (15) beeinflußt wird und an den sich eine Regenerationsschaltung (21) anschließt, deren Ausgang

ZT/P1-Wr/R
24.01.1983

U.Langewellpott-4

mit einem die Abtastschalter ($13_1$-$13_{16}$) steuernden Detektor (22) für den Abtastzeitpunkt und den Mischern ($11_1$-$11_{16}$) verbunden ist und diesen zum phasenkohärenten Mischen eine Signalschwingung mit dem entsprechenden Verlauf zuführt.

2. Empfangsgerät nach Anspruch 1, dadurch gekennzeichnet, daß die Regenerationsschaltung (21) aus einer Verzögerungsleitung (28) besteht, deren Ausgang über ein erstes Dämpfungsglied (29) mit einem Summierer (27) an ihrem Eingang verbunden ist, der über ein zweites Dämpfungsglied (26) an den Eingang der Regenerationsschaltung angeschlossen ist.

3. Empfangsgerät nach Anspruch 2, dadurch gekennzeichnet, daß die Verzögerungsdauer der Verzögerungsleitung (28) der Dauer eines Zeichens entspricht.

4. Empfangsgerät nach Anspruch 2, dadurch gekennzeichnet, daß das zweite Dämpfungsglied (26) um einen Faktor $\alpha$ kleiner als eins abschwächt und das erste Dämpfungsglied (29) um den Faktor $\beta = 1 - \alpha$ abschwächt.

5. Empfangsgerät nach Anspruch 4, dadurch gekennzeichnet, daß die Faktoren der Dämpfungsglieder einstellbar sind.

6. Empfangsgerät nach Anspruch 5, dadurch gekennzeichnet, daß der Faktor $\alpha$ des zweiten Dämpfungsgliedes (26) zu Beginn eines jeden Zeitschlitzes für die Dauer der Synchronisationspräambel gefolgt von einer Folge von wenigen bekannten Zeichen als Trainingssequenz auf eins gestellt wird.

U.Langewellpott -4

7.    Empfangsgerät nach Anspruch 1, dadurch gekennzeichnet, daß der Ausgang des Demultiplexers (20) über
einen um π/2 drehenden Phasenschieber (24) und der Ausgang der Regenerationsschaltung direkt mit einem Phasenvergleicher (23) verbunden ist, dessen Ausgang über einen
Tiefpaß (25) mit einem Steuereingang eines als Mischoszillator (4) dienenden spannungsgesteuerten Oszillators
verbunden ist, der einen Mischer (3) zur Erzeugung des
ZF-Signales speist.

8.    Empfangsgerät nach einem der vorhergehenden Ansprüche,
dadurch gekennzeichnet, daß auch biorthogonale m-wertige
Codezeichen verwendet werden und dann im Demultiplexer
(20) eine Vorzeichenumkehr durchführbar ist.

Fig. 1

Fig. 2